(19) Europäisches Patentamt
European Patent Office
Office européen des brevets

(11) Numéro de publication : **0 469 508 B1**

# (12) FASCICULE DE BREVET EUROPEEN

(45) Date de publication du fascicule du brevet : **18.01.95 Bulletin 95/03**

(51) Int. Cl.[6] : **H02P 7/62**

(21) Numéro de dépôt : **91112698.5**

(22) Date de dépôt : **29.07.91**

## (54) Procédé et dispositif d'estimation de flux d'induction magnétique d'un moteur asynchrone, en vue notamment de la commande de ce moteur par régulation de flux.

(30) Priorité : **01.08.90 FR 9009848**

(43) Date de publication de la demande : **05.02.92 Bulletin 92/06**

(45) Mention de la délivrance du brevet : **18.01.95 Bulletin 95/03**

(84) Etats contractants désignés : **AT BE CH DE ES FR GB IT LI NL SE**

(56) Documents cités :
**EP-A- 0 335 180**
**US-A- 4 431 957**
**US-A- 4 470 000**

(73) Titulaire : **GEC ALSTHOM SA**
**38, avenue Kléber**
**F-75116 Paris (FR)**

(72) Inventeur : **Bavard, Jean**
**208, rue de Saint Cyr**
**F-69000 Lyon (FR)**
Inventeur : **Wei, Liming**
**173, rue Anatole France**
**F-69100 Villeurbanne (FR)**

(74) Mandataire : **Weinmiller, Jürgen et al**
**Lennéstrasse 9**
**Postfach 24**
**D-82336 Feldafing (DE)**

EP 0 469 508 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé et un dispositif d'estimation du flux d'induction magnétique, statorique, d'entrefer, ou rotorique d'un moteur asynchrone, en vue notamment de la commande de ce moteur par régulation de flux.

Il est connu de réaliser une commande de moteur asynchrone par asservissement de flux à une valeur de consigne (voir US-A-4 431 957).

Une telle commande nécessite une mesure de flux, par exemple du flux rotorique, qui est jusqu'à présent réalisée soit en prévoyant des spires supplémentaires au rotor et en déduisant ce flux de la tension observée aux bornes de ces spires, soit en effectuant des mesures de tension et de courant statoriques et en déduisant ce flux de ces mesures et de paramètres caractéristiques du moteur, à partir des équations définissant le fonctionnement du moteur.

La première méthode a pour inconvénient, outre le fait de poser des problèmes pratiques de réalisation, d'être peu fiable, du fait que le capteur de flux, implanté directement dans le moteur, est soumis à un environnement relativement agressif en température, humidité, pollution, vibrations, chocs ... etc.

La deuxième méthode a pour inconvénient de voir sa fiabilité affectée par les variations, en fonction de l'état thermique du moteur, de l'un au moins desdits paramètres caractéristiques du moteur, notamment sa résistance statorique.

Une façon d'éviter cet inconvénient consiste à implanter un capteur de température à l'intérieur du moteur, mais l'on retrouve alors des inconvénients de même nature que pour la première méthode précitée.

La présente invention a pour objet un procédé et un dispositif d'estimation de flux d'induction magnétique d'un moteur asynchrone permettant d'éviter ces inconvénients.

La présente invention concerne un procédé et un dispositif d'estimation de flux d'induction magnétique pour moteur asynchrone suivant les revendications 1 et 7.

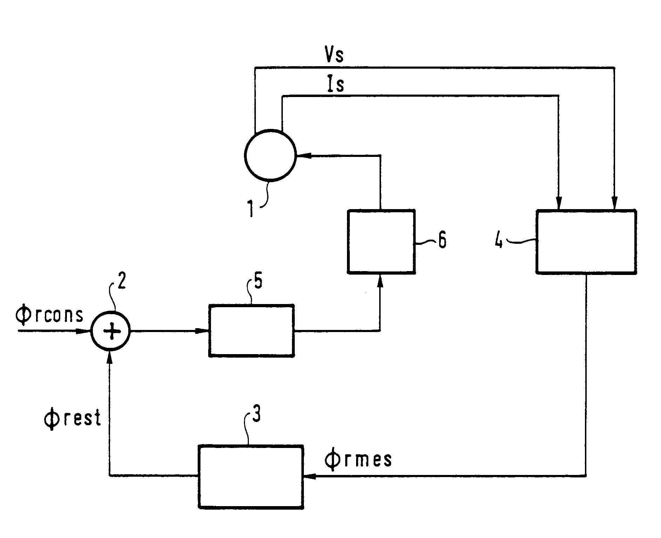

D'autres objets et caractéristiques de la présente invention apparaîtront à la lecture de la description suivante d'exemples de réalisation, faite en relation avec la figure ci-annexée qui représente un schéma synoptique montrant une application possible d'un procédé suivant l'invention à la commande de moteur asynchrone par régulation de flux rotorique.

On décrit ci-après deux exemples de réalisation d'un procédé suivant l'invention, dans lesquels, à titre d'exemple, l'estimation de flux consiste en une estimation de flux rotorique, les tensions et courants mesurés étant alors la tension et le courant statoriques et ledit paramètre ayant une valeur prédéterminée pouvant différer notablement de sa valeur réelle étant la résistance statorique, ces deux exemples différant entre eux par la méthode de calcul du flux dit estimé.

On désigne par $V_S$ et $I_S$ respectivement la tension statorique et le courant statorique mesurés. Ces grandeurs sont mesurées par des moyens classiques qui ne seront donc pas redécrits ici.

On rappelle que l'équation vectorielle définissant le fonctionnement d'un moteur asynchrone et reliant les vecteurs $\overline{I_S}$ et $\overline{V_S}$ au vecteur flux rotorique réel $\overline{\phi r}$ du moteur est la suivante :

$$\overline{\phi r} = \frac{L_r}{M_m}\left(\int \overline{V_S}dt - \int R_S \overline{I_S}dt - \sigma L_S \overline{I_S}\right) \quad (1)$$

avec :

- $L_r$ : inductance cyclique du rotor
- $L_m$ : inductance mutuelle cyclique entre stator et rotor
- $R_S$ : résistance du stator par phase du moteur
- $L_S$ : inductance cyclique du stator
- $\sigma$ : coefficient de dispersion ( $\sigma = 1 - Lm^2 / (L_r . L_s)$ )

Le flux rotorique dit mesuré $\phi rmes$, est défini par :

$$\overline{\phi_{rmes}} = \frac{L^*_r}{L^*_m}\left(\int \overline{V_S}dt - \int R_S^* \overline{I_S}dt - \sigma^* L_S^* \overline{I_S}\right) \quad (2)$$

où le symbole * signifie que les valeurs des paramètres correspondants sont des valeurs prédéterminées, qui peuvent différer des valeurs réelles suivant le point de fonctionnement du moteur mais qui restent très voisines de ces valeurs réelles dans le cas des paramètres $L_r$ *, $L_m$ *, $\sigma$* et $L_S$ * et qui peuvent par contre en différer notablement dans le cas du paramètre $R_S$, par exemple dans un rapport 2 pour une plage de température donnée de fonctionnement du moteur.

Ce flux rotorique mesuré est calculé par des moyens de calcul classiques qui ne seront donc pas redécrits ici.

A partir de ce flux mesuré est calculé suivant l'invention, un flux dit estimé, suivant une expression déduite des équations de fonctionnement du moteur et fonction du flux mesuré, de paramètres caractéristiques du moteur autres que la résistance statorique et éventuellement des mesures de tension ou de courant du moteur.

On considère tout d'abord une première méthode d'obtention de cette expression correspondant à une valeur $R_S$ * qui peut être non nulle ou nulle.

On remplace, dans l'équation (2), la tension $V_S$ par son expression donnée par l'équation (1).

On obtient :

$$\overline{\phi}_{rmes} = \frac{L_r^*}{L_m^*}\left(\int \Delta R_S \overline{I_S}\, dt + \Delta\sigma L_S \overline{I_S} + \frac{L_m}{L_r}\overline{\phi}_r\right) \quad (3)$$

avec

$$\Delta R_S = R_S - R_S^*$$
$$\Delta\sigma L_S = \sigma L_S - \sigma^* L_S^*$$

soit, en régime permanent :

$$\overline{\phi}_{rmes} = \frac{L_r^*}{L_m^*}\left(-\frac{\Delta R_S}{w_S} j \overline{I_S} + \Delta\sigma L_S \overline{I_S} + \frac{L_m}{L_r}\overline{\phi}_r\right) \quad (4)$$

où $w_s$ désigne la pulsation d'alimentation du stator.

En effectuant une multiplication scalaire par $\overline{I_S}$, on fait disparaître le terme

$$-\frac{\Delta R_S}{W_S} j \overline{I_S}$$

et on obtient :

$$\overline{\phi}_{rmes} \cdot \overline{I_S} = \frac{L_r^*}{L_m^*}\left(\Delta\sigma L_S I_S^2 + \frac{L_m}{L_r}\overline{\phi}_r \cdot \overline{I_S}\right) \quad (5)$$

Soient $I_d$ et $I_m$ respectivement les projections de $\overline{I_S}$ suivant les vecteurs $\overline{\phi}rmes$ et $\overline{\phi r}$, c'est-à-dire les composantes de $I_S$ suivant l'axe direct de repères liés respectivement au flux rotorique mesuré $\phi$rmes et au flux rotorique réel $\phi$r.

On sait, d'après les équations de fonctionnement du moteur, que dans un repère lié au flux rotorique réel la composante $I_m$ s'exprime de la façon suivante :

$$Im = \frac{(1 + Tr\,p)\phi r}{L_m} \quad (6)$$

où p désigne l'opérateur différentiel de Laplace et $T_r$ la constante de temps du rotor, avec

$$T_r = \frac{L_r}{R_r}$$

L'équation (5) s'écrit alors :

$$\phi_{rmes} \cdot I_d = \frac{L_r^*}{L_m^*}\left(\Delta\sigma L_S I_S^2 + \frac{(1 + Trp)\phi_r^2}{L_r}\right) \quad (7)$$

D'où :

$$\phi_r = \sqrt{\frac{(\phi rmes.I_d - \frac{L_r^*}{L_m^*}\Delta\sigma L_S I_S{}^2)L_m{}^* L_r}{L_r{}^*(1 + T_r p)}} \quad (8)$$

En tenant compte du fait que $\Delta\sigma L_S$ est approximativement égal à zéro, et que $L_r$ * est approximativement égal à $L_r$ et $L_m$ * approximativement égal à $L_m$, on obtient un flux rotorique estimé $\phi$rest proche du flux réel $\phi$r et défini par l'expression :

$$\phi\,rest = \sqrt{\frac{\phi rmes.I_d.L_m}{1 + T_r p}} \quad (9)$$

expression dans laquelle interviennent uniquement le flux mesuré $\phi$rmes et des grandeurs déterminables $I_d$, $L_m$ et $T_r$ caractéristiques du moteur, autres que la résistance $R_S$.

On considère maintenant une deuxième méthode d'obtention de l'expression donnant le flux estimé, correspondant à une valeur $R_S$ * nulle.

Dans ce cas l'expression vectorielle de $\phi$rmes est la suivante :

$$\overline{\phi}_{rmes} = \frac{L_r{}^*}{L_m{}^*}\left(\int \overline{V}_S\,dt - \sigma^* L_S{}^* \overline{I}_S\right) \quad (10)$$

Cette expression s'écrit, dans un repère lié au vecteur $\overline{\phi rmes}$ :

$$\phi_{rmes} = \frac{L_r{}^*}{L_m}\left(\frac{V_{Sq}}{w_S} - \sigma^* L_S{}^* I_{Sd}\right) \quad (11)$$

où $I_{Sd}$ et $V_{Sq}$ désignent respectivement la composante de $\overline{I_S}$ suivant l'axe direct de ce repère et la composante de $V_S$ suivant l'axe en quadrature.

Comme les vecteurs $\overline{\phi_r}$ (flux rotorique réel) et $\overline{\phi rmes}$ (flux rotorique mesuré) ont peu d'écart angulaire, on peut remplacer, dans cette dernière expression, $V_{Sq}$ et $I_{sd}$ par leur expression, suivant les équations de fonctionnement du moteur, en fonction du flux réel $\phi$r, dans un repère lié au flux réel, et en régime permanent, à savoir :

$$V_{Sq} = w_S\,\phi_r\left(\frac{L_S}{L_m} + g\frac{R_S}{R_r}\frac{L_R}{L_m}\right) \quad (12)$$

$$Isd = \frac{\phi_r}{L_m}$$

où g désigne le glissement du moteur et on obtient :

$$\phi_{rmes} \simeq \frac{L_r{}^*}{L_m{}^*}\frac{L_S}{L_m}\phi_r + \frac{L_r{}^*}{L_m{}^*}g\frac{R_S}{R_r}\frac{L_r}{L_m}\phi_r - \sigma^* L_S{}^*\frac{L_r{}^*}{L_m{}^*}\frac{\phi_r}{L_m} \quad (14)$$

soit, compte tenu du fait que les valeurs $L_r$*, $L_m$*, $L_S$* et $\sigma$* sont approximativement égales respectivement aux valeurs $L_r$, $L_m$, $L_S$ et $\sigma$ :

$$\phi_{rmes} \simeq \phi_r \left( \frac{L_r L_S}{L_m^2} (1-\sigma) + g \frac{R_S}{R_r} \frac{L_r^2}{L_m^2} \right)$$

Comme $\sigma$ est défini par

$$\sigma = 1 - \frac{L_m^2}{L_r L_S}$$

on obtient :

$$\phi_{rmes} \simeq \phi_r \left(1 + g \frac{R_S}{R_r} \frac{L_r^2}{L_m^2}\right)$$

Le flux estimé $\phi\ r_{est}$ est alors défini comme représentant une valeur approchée du flux réel $\phi_r$, par la relation :

$$\phi rest = \frac{\phi rmes}{1 + g \frac{R_S}{R_r} \frac{L_r^2}{L_m^2}} \quad (15)$$

On notera que dans cette expression de $\phi$rest, la résistance statorique $R_S$ intervient par son rapport avec la résistance rotorique $R_r$. Comme ces deux résistances évoluent de la même façon au cours du fonctionnement du moteur, ce rapport est pratiquement constant quel que soit le point de fonctionnement du moteur.

Il en est de même des valeurs $L_r^2$ et $L_m^2$, ou de leur rapport $\frac{L_r^2}{L_m^2}$, et on peut par conséquent écrire cette dernière expression sous la forme :

$$\phi rest = \frac{\phi rmes}{1 + kg} \quad (16)$$

où "k" désigne une constante fonction uniquement du type de moteur. Comme dans la méthode d'obtention du flux estimé décrite précédemment, on note que dans cette expression interviennent uniquement le flux mesuré $\phi$rmes et des grandeurs caractéristiques du moteur autres que la résistance statorique.

A titre d'exemple d'application du procédé suivant l'invention, est représenté sur la figure annexée un schéma synoptique d'un dispositif de commande d'un moteur asynchrone 1 par asservissement de son flux rotorique à une valeur de consigne $\phi$rcons.

Un détecteur d'écart 2 détecte un éventuel écart entre cette valeur de consigne et la valeur du flux rotorique estimé $\phi$ rest issue d'un moyen de calcul 3 qui opère suivant l'une ou l'autre des méthodes décrites ci-dessus, à partir d'une valeur de flux mesuré $\phi$ rmes issue elle-même d'un moyen de calcul 4 opérant, de façon classique, à partir de valeurs mesurées de la tension statorique $V_S$ et du courant statorique $I_S$.

L'une ou l'autre, (9) ou (16) des expressions donnant le flux estimé $\phi$rest peuvent être calculées par des moyens de calcul classiques qui ne nécessitent donc pas de description particulière.

De façon classique, l'écart détecté par le détecteur d'écart 2 est appliqué à un moyen de régulation 5, avant application à un organe 6 de commande du moteur, qui est également classique.

Le procédé d'estimation de flux ainsi décrit, appliqué à une telle commande, permet ainsi d'obtenir une bonne précision sans présenter les problèmes pratiques de réalisation rencontrés dans l'art antérieur.

On notera que les amplitudes des flux statorique, d'entrefer, et rotorique étant très voisines, les mêmes principes de calcul de flux estimé peuvent être utilisés quel que soit le flux considéré.

## Revendications

1. Procédé d'estimation de flux d'induction magnétique d'un moteur asynchrone, notamment en vue de la commande de ce moteur par régulation de flux d'induction magnétique, comportant les opérations suivantes :
   - mesure de tension ($V_S$) et de courant ($I_S$) de ce moteur,
   - calcul d'un flux, dit flux mesuré ($\Phi$rmes), suivant les équations de fonctionnement du moteur, et à partir desdites mesures et de valeurs prédéterminées de paramètres caractéristiques du moteur, caractérisé en ce que l'un au moins, desdits paramètres a une valeur fixée arbitrairement, pouvant différer notablement de sa valeur réelle, et en ce qu'il est
- calculé à partir de ce flux mesuré (Φrmes), un flux , dit flux estimé (Φrest), identifiable au flux réel, suivant une expression déduite des équations de fonctionnement du moteur et fonction du flux mesuré (Φrmes), de paramètres caractéristiques du moteur autres que ledit paramètre ayant une valeur fixée arbitrairement pouvant différer notablement de sa valeur réelle, et éventuellement desdites mesures de tension ($V_S$) ou de courant ($I_S$).

**2.** Procédé selon la revendication 1, caractérisé en ce que ladite mesure de flux consiste en une mesure de flux rotorique (Φrmes) et en ce que lesdits courant et tension mesurés sont la tension ($V_S$) et le courant statorique ($I_S$), et ledit paramètre ayant une valeur prédéterminée pouvant différer notablement de sa valeur réelle, la résistance statorique du moteur.

**3.** Procédé selon la revendication 2, caractérisé en ce que, ladite valeur prédéterminée de la résistance statorique du moteur étant choisie nulle, ladite expression du flux rotorique estimé (Φrest) est obtenue :
- en écrivant dans un repère lié au flux rotorique mesuré l'équation vectorielle de fonctionnement du moteur donnant le flux estimé (Φrest) en fonction de la tension ($V_S$) et du courant statoriques ($I_S$),
- en remplaçant dans cette écriture la tension ($V_S$) et le courant statorique ($I_S$) par lteur expression en fonction du flux rotorique réel, identifié au flux rotorique estimé, dans un repère lié au flux rotorique réel, et
- en identifiant l'expression ainsi obtenue à la valeur déterminée du flux mesuré.

**4.** Procédé selon l'une des revendications 1 à 3, caractérisé en ce que ladite expression du flux rotorique estimé $\phi_r est$ est la suivante :

$$\phi_r est = \frac{\phi_r mes}{1 + k.g}$$

où $\phi_r mes$ désigne le flux mesuré, g le glissement du moteur, et k une constante fonction du moteur.

**5.** Procédé selon la revendication 2, caractérisé en ce que, la valeur fixée arbitrairement de la résistance statorique étant choisie non nulle ou nulle, ladite expression du flux rotorique estimé (Φrest) est obtenue :
- en remplaçant, dans l'équation vectorielle de fonctionnement du moteur donnant le flux mesuré (Φrmes) en fonction de la tension ($V_S$) et du courant statoriques ($I_S$), la tension statorique par son expression en fonction du flux réel et du courant statorique, suivant la même équation,
- en multipliant scalairement l'expression ainsi obtenue par le courant statorique,
- en remplaçant, dans la nouvelle expression obtenue, le produit scalaire entre le flux rotorique réel et le courant statorique par le produit entre le flux réel, identifié au flux rotorique estimé, et la valeur de la composante directe du courant statorique en fonction du flux rotorique réel dans un repère lié au flux rotorique réel, et
- en identifiant l'expression ainsi obtenue à la valeur déterminée du flux mesuré.

**6.** Procédé selon l'une des revendications 1, 2 et 5, caractérisé en ce que ladite expression du flux estimé $\phi_r est$ est la suivante :

$$\phi_r est = \sqrt{\frac{L_m . \phi_r mes . I_d}{1 + T_r p}}$$

où $\phi_r mes$ désigne le flux mesuré, $I_d$ la composante directe du courant statorique mesuré dans un repère lié au flux rotorique mesuré, $L_m$ l'inductance mutuelle cyclique entre stator et rotor, $T_r$ la constante de temps du rotor, et p l'opérateur différentiel de Laplace.

**7.** Dispositif pour la mise en oeuvre du procédé suivant l'une des revendications 1 à 6, comportant :
- des moyens de mesure de tension ($V_S$) et de courant ($I_S$) de ce moteur,
- des moyens (4) de calcul d'un flux, dit flux mesuré ($\Phi_r mes$), suivant les équations de fonctionnement du moteur, et à partir desdites mesures et de valeurs prédéterminées de paramètres caractéristiques du moteur caractérisée en ce que l'un au moins desdits paramètres a une valeur fixée arbitrairement, peut différer notablement de sa valeur réelle, et en ce qu'il est prévu
- des moyens (3) de calcul, à partir de ce flux mesuré (Φrmes), d'un flux, dit flux estimé (Φrest), identifiable au flux réel du moteur, suivant une expression déduite des équations de fonctionnement du moteur et fonction du flux mesuré (Φrmes), de paramètres caractéristiques du moteur autres que ledit paramètre ayant une valeur pouvant différer notablement de sa valeur réelle, et éventuellement desdites mesures de tension ($V_S$) ou de courant ($I_S$).

## Patentansprüche

1. Verfahren zur Abschätzung des magnetischen Induktionsflusses eines Asynchronmotors, insbesondere zur Steuerung dieses Motors durch Regelung des magnetischen Induktionsflusses, wobei folgende Operationen durchgeführt werden:
   - Messung der Spannung ($V_S$) und des Stroms ($I_S$) dieses Motors,
   - Berechnung eines sogenannten gemessenen Flusses ($\Phi_{rmes}$) aufgrund der Betriebsgleichungen des Motors und ausgehend von diesen Meßwerten und vorbestimmten charakteristischen Motorparametern, dadurch gekennzeichnet, daß mindestens einer dieser Parameter einen frei festgelegten Wert hat, der von seinem realen Wert stark abweichen kann, und daß ausgehend von diesem gemessenen Fluß ($\Phi_{rmes}$) ein mit dem tatsächlichen Fluß verknüpfter sogenannten Schätzfluß ($\Phi_{rest}$) gemäß einer aus den Betriebsgleichungen des Motors abgeleiteten Gleichung und abhängig vom gemessenen Fluß ($\Phi_{rmes}$), von charakteristischen Parametern des Motors mit Ausnahme des Parameters mit frei festgelegtem und ggf. stark vom tatsächlichen Wert abweichenden Wert sowie ggf. abhängig von den Messungen der Spannung ($V_S$) oder des Stroms ($I_S$) berechnet wird.

2. Verfahren nach Anspruch 1, dadurch gekennzeichnet, daß die Flußmessung in einer Messung des Rotorflusses ($\Phi_{rmes}$) besteht und daß die gemessenen Werte von Strom und Spannung die Werte des Statorstroms ($I_S$) und der Statorspannung ($V_S$) sind, wobei der fest vorgegebene Parameter, der erheblich von seinem tatsächlichen Wert abweichen kann, der Statorwiderstand des Motors ist.

3. Verfahren nach Anspruch 2, dadurch gekennzeichnet, daß der vorbestimmte Wert des Statorwiderstands des Motors zu Null gewählt wird und der Ausdruck des rotorseitigen Schätzflusses ($\Phi_{rest}$) erhalten wird,
   - indem in einem mit dem rotorseitigen gemessenen Fluß verknüpften Bezugssystem die Vektorgleichung des Motorbetriebs geschrieben wird, die den Schätzfluß ($\Phi_{rest}$) abhängig von der Spannung ($V_S$) und dem Strom ($I_S$) auf der Statorseite ergibt,
   - indem in diesem Ausdruck die Spannung ($V_S$) und der Strom ($I_S$) auf der Statorseite durch ihren Ausdruck in Abhängigkeit vom tatsächlichen Rotorfluß ersetzt wird, der mit dem geschätzten Rotorfluß verknüpft ist, in einem mit dem tatsächlichen Rotorfluß verknüpften Bezugsnetz,
   - und indem der so erhaltene Ausdruck auf den bestimmten Wert des gemessenen Flusses bezogen wird.

4. Verfahren nach einem der Ansprüche 1 bis 3, dadurch gekennzeichnet, daß der Ausdruck des rotorseitigen Schätzflusses $\Phi_r$, folgendermaßen geschrieben wird:

$$\phi_r est = \frac{\phi_r mes}{1 + k.g}$$

   wobei $\Phi_{rmes}$ den gemessenen Fluß, g den Schlupf des Motors und k eine vom Motor abhängige Konstante darstellt.

5. Verfahren nach Anspruch 2, dadurch gekennzeichnet, daß der frei festgelegte Wert des Statorwiderstands zu Null oder ungleich Null festgelegt wird und daß der rotorseitige Schätzfluß ($\Phi_{rest}$) erhalten wird,
   - indem in der Vektorgleichung für den Betrieb des Motors, die den gemessenen Fluß ($\Phi_{rmes}$) abhängig von der Spannung ($V_S$) und dem Strom ($I_S$) auf der Statorseite ergibt, die statorseitige Spannung durch den Ausdruck abhängig vom tatsächlichen Fluß und vom statorseitigen Strom gemäß derselben Gleichung ersetzt wird,
   - indem der so erhaltene Ausdruck mit dem Statorstrom skalar multipliziert wird,
   - indem in dem neu erhaltenen Ausdruck das Skalarprodukt zwischen dem tatsächlichen Rotorfluß und dem Statorstrom durch das Produkt zwischen dem tatsächlichen Fluß, der auf den rotorseitigen Schätzfluß bezogen ist, und dem Wert der Direktkomponente des statorseitigen Stroms abhängig vom tatsächlichen rotorseitigen Fluß in einem mit dem tatsächlichen rotorseitigen Fluß verknüpften Bezugssystem ersetzt wird,
   - und indem der so erhaltene Ausdruck auf den bestimmten Wert des gemessenen Flusses bezogen wird.

6. Verfahren nach einem der Ansprüche 1, 2 und 5, dadurch gekennzeichnet, daß der Ausdruck für den Schätzfluß $\Phi_{rest}$ folgende Form hat:

$$\phi_r est = \sqrt{\frac{L_m . \phi_r mes. I_d}{1 + T_r p}}$$

   wobei $\Phi_{rmes}$ den gemessenen Fluß, $I_d$ die direkte Komponente des gemessenen statorseitigen Stroms in einem mit dem gemessenen rotorseitigen Fluß verknüpften Bezugssystem, $L_m$ die wechselseitige zyklische Induktivität zwischen Stator und Rotor, $T_r$ die Zeitkonstante des Rotors und p den Differentialoperator nach Laplace angibt.

7. Vorrichtung zur Durchführung des Verfahrens nach einem der Ansprüche 1 bis 6,
   - mit Mitteln zur Messung der Spannung ($V_S$) und des Stroms ($I_S$) dieses Motors,
   - mit Mitteln (4) zur Berechnung eines sogenannten gemessenen Flusses ($\Phi_{rmes}$) aufgrund der Betriebsgleichungen des Rotors und ausgehend von diesen Meßwerten und von vorgegebenen charakteristischen Parameterwerten des Motors, dadurch gekennzeichnet, daß mindestens einer dieser Parameter einen frei festgelegten Wert hat, der erheblich von seinem tatsächlichen Wert abweichen kann, und daß Mittel (3) vorgesehen sind, um ausgehend von diesem gemessenen Fluß ($\Phi_{rmes}$), von einem Schätzfluß ($\Phi_{rest}$), der mit dem tatsächlichen Fluß des Motors verknüpft werden kann, gemäß einem von den Betriebsgleichungen des Motors abgeleiteten und vom gemessenen Fluß ($\Phi_{rmes}$), von charakteristischen Motorparametern mit Ausnahme des Parameters, dessen Wert erheblich von seinem tatsächlichen Wert abweichen kann, und ggf. von den Meßwerten der Spannung ($V_S$) oder des Stroms ($I_S$) zu berechnen.

## Claims

1. Method of estimating the magnetic induction flux of an asynchronous motor, in particular for control of said motor by regulation of the magnetic induction flux, comprising the following operations:
   - measuring the motor voltage ($V_S$) and current ($I_S$),
   - calculating a measured flux ($\Phi_{rmes}$) from the motor operation equations and from said measured values and predetermined values of parameters characteristic of the motor, characterised in that at least one of said parameters has an arbitrary fixed value which can differ significantly from its real value, and in that there is calculated from said measured flux ($\Phi_{rmes}$) an estimated flux ($\Phi_{rest}$) close to the real flux, using an expression deduced from the motor operating equations and dependent on the measured flux ($\Phi_{rmes}$), parameters characteristic of the motor other than said parameter having an arbitrary fixed value that can differ significantly from its real value, and possibly said measured voltage ($V_S$) or current ($I_S$).

2. Method according to claim 1 characterised in that said flux measured is the rotor flux ($\Phi_{rmes}$) and in that said current and voltage measured are the stator voltage ($V_S$) and current ($I_S$), said parameter having a predetermined value that can differ significantly from its real value being the stator resistance of the motor.

3. Method according to claim 2 characterised in that, said predetermined value of the motor stator resistance being a null value, said expression for the estimated rotor flux ($\Phi_{rest}$) is obtained:
   - by writing in a frame of reference related to the measured rotor flux the vector equation of operation of the motor giving the estimated flux ($\Phi_{rest}$) as a function of the stator voltage ($V_S$) and current ($I_S$),
   - replacing in this equation the stator voltage ($V_S$) and current ($I_S$) by their expression as a function of the real rotor flux, close to the estimated rotor flux, in a frame of reference related to the real rotor flux, and
   - approximating the expression thus obtained to the determined value of the measured flux.

4. Method according to any one of claims 1 to 3 characterised in that said expression for the estimated rotor flux ($\Phi_{rest}$) is:

$$\Phi_{rest} = \frac{\Phi_{rmes}}{1 + k.g}$$

   where ($\Phi_{rmes}$) is the measured flux, g is the motor slip and k is a constant dependent on the motor.

5. Method according to claim 2 characterised in that, the arbitrary fixed value of the stator resistance being a null or non-null value, said expression for the estimated rotor flux ($\Phi_{rest}$) is obtained:
   - by replacing in the vector equation of operation of the motor giving the measured flux ($\Phi_{rmes}$) as a function of the stator voltage ($V_S$) and current ($I_S$), the stator voltage by its expression as a function of the real flux and the stator current, according to the same equation,
   - by effecting the scalar multiplication of the expression thus obtained by the stator current,

- in the new expression thus obtained, replacing the scalar product of the real rotor flux by the stator current by the product of the real flux close to the estimated rotor flux and the value of the direct component of the stator current as a function of the real rotor flux in a frame of reference related to the real rotor flux, and
- approximating the expression thus obtained to the determined value of the measured flux.

6. Method according to any one of claims 1, 2 and 5 characterised in that said estimated flux $\Phi_{rest}$ is given by the expression:

$$\Phi_{rest} = \sqrt{\frac{L_m \cdot \Phi_{rmes} \cdot I_d}{1 + T_r p}}$$

where $\Phi_{rmes}$ denotes the measured flux, $I_d$ the direct component of the stator current in a frame of reference related to the measured rotor flux, $L_m$ the cyclic mutual inductance between the stator and the rotor, $T_r$ the time constant of the rotor and p the differential Laplace operator.

7. Device for implementing the method according to any one of claims 1 to 6, including:
   - means for measuring the motor voltage ($V_S$) and current ($I_S$),
   - means (4) for calculating a measured flux ($\Phi_{rmes}$) using the operating equations of the motor, said measured values and predetermined values of parameters characteristic of the motor, at least one of said parameters having an arbitrary fixed value which can differ significantly from its real value, and in that
   - calculating means (3) are provided for calculating from the measured flux ($\Phi_{rmes}$) an estimated flux ($\Phi_{rest}$) close to the real motor flux using an expression deduced from the motor operating equations and dependent on the measured flux ($\Phi_{rmes}$), parameters characteristic of the motor other than said parameter having a value that can differ significantly from its real value, and possibly said measured voltage ($V_S$) and current ($I_S$).

Vs
Is
1
6
4
2
5
Φrcons
Φrest
3
Φrmes